(19) Europäisches Patentamt
European Patent Office
Office européen des brevets

(11) **EP 1 770 876 A1**

(12) **EUROPEAN PATENT APPLICATION**
published in accordance with Art. 158(3) EPC

(43) Date of publication:
**04.04.2007 Bulletin 2007/14**

(51) Int Cl.:
*H04B 7/08* (2006.01)   *H04B 7/005* (2006.01)

(21) Application number: **05758203.3**

(22) Date of filing: **06.07.2005**

(86) International application number:
**PCT/JP2005/012450**

(87) International publication number:
**WO 2006/008963 (26.01.2006 Gazette 2006/04)**

(84) Designated Contracting States:
**DE FR GB NL**

(30) Priority: **22.07.2004 JP 2004214276**

(71) Applicant: **Pioneer Corporation**
**Tokyo 1538654 (JP)**

(72) Inventor: **YAMAMOTO, Yuji,**
**Kawagoe Koujou, Pioneer Corp.**
**Kawagoe-shi,**
**Saitama 350-8555 (JP)**

(74) Representative: **Sajda, Wolf E. et al**
**Meissner, Bolte & Partner GbR**
**Widenmayerstrasse 48**
**80538 München (DE)**

(54) **PHASE COMBINING DIVERSITY RECEIVER**

(57)     This invention is to provide a receiver and a reception method capable of improving a reception quality with respect to both FM modulation wave and AM modulation wave, and ensuring an effective receiver even under a flat fading or a frequency selective fading.

The receiver comprises: an adaptation synthesizing section ADF which receives modulation signals IFA and IFB output from receiving sections RXa and RXb, and performs an adaptation processing in an adaptation filter to generate a modulation signal Y(t) as a prediction signal; feature extraction units 30, 40 for feature-extracting envelopes of modulation signals IFA, IFB and outputting feature extraction signals Eva, EVb; an adder unit 50 for adding together the feature extraction signals Eva, EVb and generating an addition feature extraction signal Esum; and a tap coefficient altering unit 60 for adjusting tap coefficient of the adaptation filter of the adaptation synthesizing section so as to approximate the modulation signal Y(t) to the addition feature extraction signal Esum. When the modulation signals IFA, IFB are AM-modulated signals, a pass frequency band of the feature extraction units 30, 40 is switched over to a cut-off frequency f1 which is higher than a frequency band of an AM-demodulated signal Sd. When the modulation signals are FM-modulated signals, a pass frequency band of the feature extraction units 30, 40 is switched over to a cut-off frequency f2 which is lower than an AM altering frequency generated due to a frequency selective fading of the modulation signals IFA, IFB.

*FIG.3*

**Description**

Technical Field

The present invention relates to a phase synthesizing diversity receiver and a reception method capable of inhibiting an influence of multipass fading during reception.

Background Technique

With regard to a mobile receiver such as a radio receiver or the like mounted in a vehicle for receiving a broadcast radio wave through an antenna, there has been a problem that a movement of the vehicle will cause a so-called multipass fading in which a level and a phase of a reception signal will change rapidly, causing a deterioration in a reception quality.

Conventionally, as solutions for preventing a reception quality deterioration caused due to a multipass fading, there have been suggested a synthesizing diversity reception method which uses a plurality of reception antennas to synthesizes a plurality of modulation signals to perform a demodulation, a space diversity reception method which selects a reception antenna having an acceptable reception quality from a plurality of reception antennas, and a reception method which uses an adaptive digital filter to remove a multipass distortion from modulation signals.

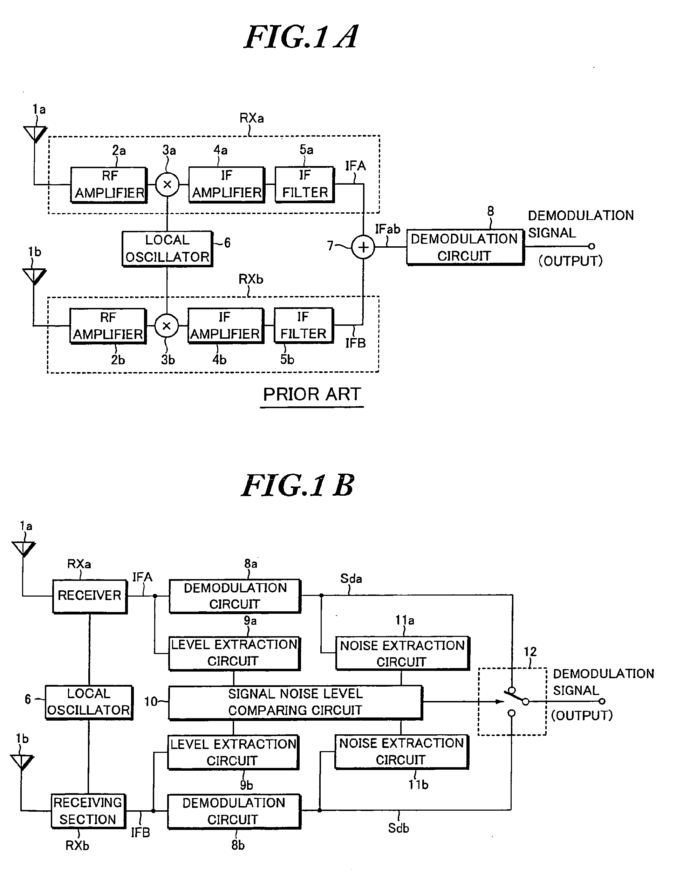

Fig. 1(a) is a block diagram showing the composition of a receiver which utilizes a conventional synthesizing diversity reception method involving the use of two reception antennas, indicating the same constitution as disclosed in Japanese Unexamined Patent Application Publication No. 06-216815.

As shown in Fig. 1(a), this conventional receiver comprises: receiving sections RXa and RXb of two systems connected with reception antennas 1a and 1b for receiving coming radio waves; an adder 7; and a demodulation circuit 8.

The receiving sections RXa, RXb have RF amplifiers 2a, 2b, mixers 3a, 3b, IF amplifiers 4a, 4b, and IF filters 5a, 5b.

When the reception antennas 1a, 1b receive coming radio waves and output reception signals of high frequencies, the RF amplifiers 2a, 2b will apply a band restriction to the respective reception signals and amplify these signals which are then output to the mixers 3a and 3b. Here, on the occasion of band restriction, a band turning in response to a reception frequency is performed according to a control voltage supplied from a PLL circuit (not shown).

In the mixers 3a and 3b, the respective outputs of the RF amplifiers 2a and 2b are combined with the local signals (local oscillation signals) output from the local oscillator 6, thereby generating intermediate frequency signals having a carrier frequency which is for example 10.7 MHz.

After the IF amplifiers 4a, 4b have amplified the respective intermediate frequency signals, the IF filters 5a and 5b apply a predetermined band dividing processing to these signals and supply these signals to the adder 7, thereby enabling the adder 7 to output an addition signal IFab containing modulation signals IFA and IFB output from the IF filters 5a and 5b. The addition signal IFab is then demodulated by the demodulation circuit 8, thereby generating and outputting a demodulation signal.

In this way, in a receiver utilizing a synthesizing diversity reception method, when the phases of the modulation signals IFA, IFB are in the same phase, since an electric power of the addition signal IFab will be doubled, it is possible to improve a reception quality under a flat fading without any delay wave.

In particular, when receiving an AM broadcast wave having a low carrier frequency, the foregoing receiver will increase the above-mentioned effect so that it is possible to improve a reception sensitivity.

Fig. 1(b) is a block diagram showing a composition of a receiver which utilizes a conventional space diversity reception method involving the use of two reception antennas.

As shown in Fig. 1(b), this conventional receiver comprises: receiving sections RXa and RXb of two systems connected with reception antennas 1a and 1b in the same manner as shown in Fig. 1(a); a local oscillator 6; demodulation circuits 8a and 8b, level extraction circuits 9a and 9b, noise extraction circuits 11a and 11b, corresponding to the respective systems; a signal noise level comparing circuit 10 and a switching circuit 12.

When the reception antennas 1a and 1b receive coming radio waves and output the respective received signals each having a high frequency, the receiving sections RXa and RXb will perform a band turning or the like, and supply modulation signals to the demodulation circuits 8a, 8b and the level extraction circuits 9a, 9b. Then, the demodulation circuits 8a, 8b will demodulate the modulation signals IFA and IFB, so as to generate demodulation signals Sda and Sdb and supply these signals to the noise extraction circuits 11a, 11b and the switching circuit 12.

The level extraction circuits 9a and 9b extract the signal components of the respective modulation signals IFA, IFB and supply the signal components to the signal noise level comparing circuit 10. The noise extraction circuits 11a and 11b extract the noise components contained in the demodulation signals Sda and Sdb, and supply the signals to the signal noise level comparing circuit 10.

The signal noise level comparing circuit 10 calculates an intensity ratio (DU ratio) of a signal component from the level extraction circuit 9a to a noise component from the noise extraction circuit 11a, as well as an intensity ratio (DU ratio) of a signal component from the level extraction circuit 9b to a noise component from the noise extraction circuit 11b. Further, the two DU ratios are compared with each other, thereby switching the switching circuit 12 to a system which has obtained a larger DU ratio.

Namely, when a DU ratio of the system on the demodulation circuit 8a side is larger than a DU ratio of the system on the demodulation circuit 8b side, the signal noise level comparing circuit 10 will switch the switching circuit 12 to the demodulation circuit 8a side, thereby outputting a demodulation signal Sda having an acceptable quality. On the other hand, when a DU ratio of the system on the demodulation circuit 8b side is larger than a DU ratio of the system on the demodulation circuit 8a side, the signal noise level comparing circuit 10 will switch the switching circuit 12 to the demodulation circuit 8b side, thereby outputting a demodulation signal Sdb having an acceptable quality.

In this way, with a receiver using a space diversity reception method, among intensity ratios (DU ratio) of so-called desired waves extracted in the level extraction circuits 9a and 9b to so-called undesired waves extracted in the noise extraction circuits 11a and 11b, selecting a demodulation signal capable of obtaining a large DU ratio makes it possible to improve a reception quality.

On the other hand, an operation in which the switching circuit 12 selects one of the demodulation signals Sda and Sdb output from the demodulation circuits 8a and 8b will exhibit substantially the same situation as when only one reception antenna is used in signal reception. For this reason, although the foregoing reception is an effective reception method under a flat fading having no delay wave, it is still impossible to obtain an adequate effect under a frequency selective fading having a delay wave.

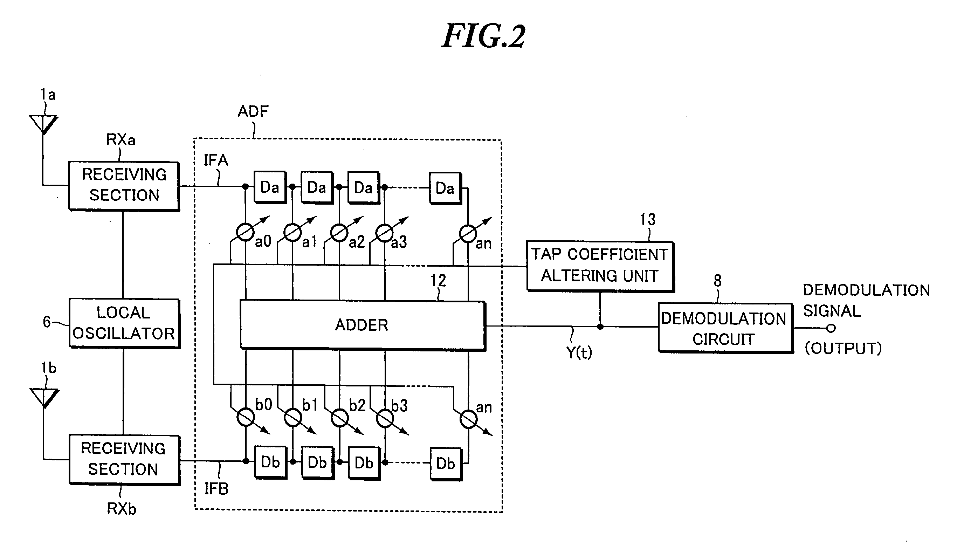

Fig. 2 is a block diagram showing a composition of a conventional receiver which utilizes a method involving the use of the above-mentioned adaptive digital filter (hereinafter, referred to as "phased-array reception method") and has two reception antennas.

Similar to the receiver shown in Figs. 1 (a) and (b), the receiver using the phased-array reception method comprises: receiving sections RXa and RXb of two systems connected with two reception antennas 1a and 1b; a local oscillator 6; an adaptation synthesizing section ADF; a tap coefficient altering unit 13; and a demodulation circuit 8.

When the reception antennas 1a and 1b receive coming radio waves and output the respective reception signals having high frequencies, the receiving sections RXa and RXb will perform a band turning or the like so as to output modulation signals IFA and IFB, while the adaptation synthesizing section ADF will convert the modulation signals IFA and IFB into signals of digital data trains in an A/D converter (not shown).

Here, the adaptation synthesizing section ADF comprises: n stages of delay elements Da which shift the modulation signals IFA converted into digital data trains in synchronism with a predetermined sampling frequency; n+1 coefficient multipliers (not shown by reference numerals) for multiplying the outputs of the respective delay elements Da by tap coefficients a0-an; n stages of delay elements Db which shift the modulation signals IFA converted into digital data trains in synchronism with a predetermined sampling frequency; n+1 coefficient multipliers (not shown by reference numerals) for multiplying the outputs of the respective delay elements Db with tap coefficients b0-bn; and an adder 12 which adds together all the outputs of these 2n+2 coefficient multipliers and outputs the added results.

In other words, the adaptation synthesizing section ADF has a constitution serving as an equalizer which has a feed-forward type (FIR type) digital filter section.

As shown in the following equation (1), the tap coefficient altering section 13 operates to compute a sum of squares SUM of a signal Y(t) output from the adder 12 and another signal Y(t-1) output one sampling period earlier, thereby detecting an envelope of signal Y(t). Further, as show in the following equation (2), the tap coefficient altering section 13 operates to compute an error Err between a reference value consisting of a constant value and the foregoing sum of squares SUM, thereby adaptively and variably adjusting the tap coefficients a0-an and b0-bn to make the error Err close to zero.

Equation 1

$$SUM = Y(t)^2 + Y(t-1) \qquad \dots (1).$$

Equation 2

$$Err = SUM - K \qquad \dots (2).$$

In this way, the tap coefficient altering section 13 adaptively and variably adjusts the tap coefficients a0-an and b0-bn to make the error Err close to zero, thereby automatically canceling a multi-pass distortion and enabling the adder 12 to output a signal Y(t) having a constant amplitude approximated to the reference value (constant value) K.

On the other hand, tap coefficient updating algorithm in the tap coefficient altering section 13 is called CMA (Constant Modulus Algorithm).

Then, the demodulation circuit 8 digital-demodulates the signal Y(t) free from the multi-pass distortion, thereby outputting a demodulation signal consisting of a digital data train.

As described above, in a receiver using a conventional phased-array reception method, the tap coefficients a0-an of the adaptation synthesizing section ADF are adaptively and variably adjusted by means of CMA, thereby generating a signal Y(t) equivalent to a modulation signal with its multipass distortion inhibited, thus making it possible to improve a reception quality.

Furthermore, in a receiver using a phased-array reception method, it is possible to improve a reception quality under a frequency selective fading or a flat fading.

In particular, since the frequency selective fading occurs mostly in FM wave and since the property of FM modulation ensures a constant amplitude without depending on modulation signal, the CMA which variably adjusts the tap coefficients a0-an and b0-bn to generate a modulation signal Y(t) having a constant amplitude is widely used in receivers fabricated for receiving FM broadcast.

Patent Document 1: Japanese Unexamined Patent Application Publication No. 06-216815.

Disclosure of the Invention

Problems to be Solved by the Invention

However, various receivers using the above-described synthesizing diversity reception method, space diversity reception method and phased-array reception method, have suffered the following problems.

At first, in a receiver using a conventional synthesizing diversity reception method shown in Fig. 1(a), in order to frequency-divide a generally used intermediate frequency signal having a frequency of 10.7 MHz, IF filters 5a and 5b are formed of ceramic filters.

For this reason, it becomes impossible to disregard an irregularity of group delays between the elements of IF filters 5a and 5b, and it is impossible to ensure a condition in which the modulation signals IFA, IFB synthesized in the adder 7 are in the same phase, thus rendering it impossible to further improve a reception quality.

Moreover, an adjustment for reducing an irregularity of group delays between the foregoing elements is troublesome, making it difficult to improve a mass productivity of the foregoing receivers.

Furthermore, with a receiver using a synthesizing diversity reception method, when a requirement requiring that the modulation signals IFA, IFB should be in the same phase has been satisfied, although it is possible to improve a reception quality under a flat fading, it is difficult to ensure a desired effect under a frequency selective fading.

On the other hand, as described above, in a receiver using a conventional space diversity reception method shown in Fig. 1(b), when the switching circuit 12 selects one of the demodulation signals Sda and Sdb output from the demodulation circuits 8a and 8b, there will be only one antenna which is used in reception. As a result, although the space diversity reception method is an effective reception method under a flat fading not involving a delay wave, it is impossible to obtain an adequate effect under a frequency selective fading involving a delay wave.

Next, a receiver using a conventional phased-array reception method shown in Fig. 2 has been recently developed and proved to be able to improve a reception quality during a reception under a flat fading or a frequency selective fading.

On the other hand, since an adaptive synthesizing section ADF operates by virtue of the CMA to generate and output a modulation signal Y(t) having a constant amplitude approximated to a reference value (constant value) K, the foregoing receiver using a conventional phased-array reception method can be used only when the modulation signals IFA and IFB are all FM waves.

For this reason, with regard to a receiver using a conventional phased-array reception method, although it is possible to inhibit a multipass distortion in an FM-modulated wave, it was impossible to inhibit multipass distortions in other modulation waves, nor was it possible to inhibit a multipass distortion in an AM wave or multipass distortions in both AM modulation wave and FM modulation wave.

The present invention has been accomplished in view of the above problems, and it is an object of the present invention to provide a receiver and a reception method capable of improving a reception quality with respect to both FM modulation wave and AM modulation wave, and ensuring an effective receiver even under a flat fading or a frequency selective fading.

Means for Solving the Problems

According to an invention recited in claim 1, there is provided a phase synthesizing diversity receiver having receiving means for generating modulation signals from signals received by a plurality of reception antennas and outputting the modulation signals. The receiver comprises: feature extraction means for extracting features of envelopes of the modulation signals and outputting feature extraction signals; adder means for adding together the feature extraction signals output from the feature extraction means to generate addition feature extraction signals; adaptation synthesizing means for shifting the modulation signals at each predetermined delay time, multiplying each shifted signal by a tap coefficient to generate a multiplication result for each of the modulation signals, and adding together multiplication results to generate modulation signals as prediction signals; and tap coefficient altering means for automatically adjusting the tap coefficients to approximate the modulation signals as prediction signals generated by the adaptation synthesizing means to the addition feature extraction signals.

According to an invention recited in claim 6 there is provided a reception method for use in a phase synthesizing diversity receiver having receiving means for generating modulation signals from signals received by a plurality of reception antennas and outputting the modulation signals. The method comprises: a feature extracting step for extracting features of envelopes of the modulation signals and outputting feature extraction signals; an adding step for adding together the feature extraction signals output in the feature extracting step to generate addition feature extraction signals; an adaptation synthesizing step for shifting the modulation signals at each predetermined delay time, multiplying each shifted signal by a tap coefficient to generate a multiplication result for each of the modulation signals, and adding together multiplication results to generate modulation signals as prediction signals; and a tap coefficient altering step for automatically adjusting the tap coefficient to approximate the modulation signals as prediction signals generated in the adaptation synthesizing step to the addition feature extraction signals.

Brief Description of the Drawings

Fig. 1 is a block diagram showing the composition of a receiver using a conventional synthesizing diversity reception method and a composition of a receiver using a space diversity reception method.

Fig. 2 is a block diagram showing the composition of a receiver using a conventional space diversity reception method.

Fig. 3 is a block diaphragm showing the composition of a phase-synthesizing diversity receiver formed according to an embodiment of the present invention.

Fig. 4 is a block diaphragm showing the composition of a phase-synthesizing diversity receiver according to one embodiment.

Fig. 5 is a block diagram showing the composition of important portions of a phase synthesizing diversity receiver shown in Fig. 4.

Fig. 6 is a block diaphragm showing the composition of important portions of a phase synthesizing diversity receiver shown in Fig. 4.

Best Mode of Carrying Out the Invention

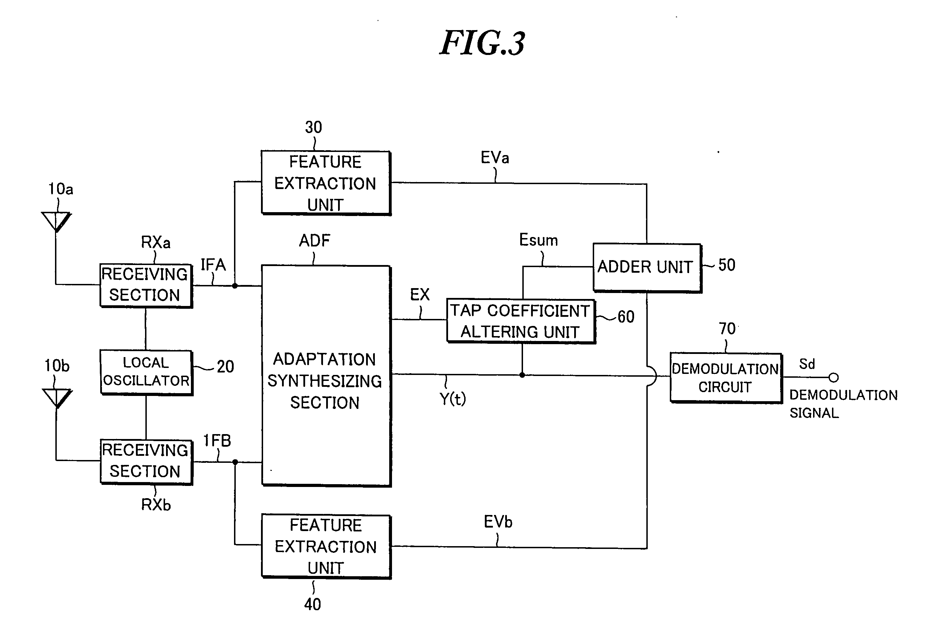

Next, description will be given to explain the best mode for carrying out the present invention with reference to Fig. 3. Fig. 3 is a block diaphragm showing the composition of a phase-synthesizing diversity receiver (hereinafter, simply referred to as "receiver") formed according to an embodiment of the present invention.

As shown in Fig. 3, this receiver contains a plurality of receiving sections RXa and RXb connected with a plurality of reception antennas 10a and 10b, a demodulation circuit 70, an adaptation synthesizing section ADF, feature extraction sections 30 and 40, an adder 50, and a tap coefficient altering section 60.

On the other hand, although the number of the reception antennas and the receiving sections can be determined appropriately in view of an actual needs , a typical example in the present embodiment contains two systems of receiving sections RXa and RXb connected with two antennas 10a and 10b.

The receiving section RXa applies a band tuning or the like to a high frequency reception signal output from the reception antenna 10a which receives coming radio wave, thereby outputting a reception signal IFA. Meanwhile, the receiving section RXb also applies a band turning or the like to a high frequency reception signal output from the reception antenna 10a, thereby outputting a reception signal IFB.

Namely, once a user or the like performs a channel selection, the respective receiving sections RXa and RXb will combine a local signal (local oscillation signal) output from the local oscillator 20 with the high frequency reception signals output from the receiving antennas 10a and 10b, thereby generating intermediate frequency signals having intermediate frequencies. Further, the respective receiving sections RXa and RXb will amplify and band-divide the respective intermediate frequency signals to output modulation signals IFA and IFB which are then supplied to the feature extraction sections 30 and 40 as well as the adaptation synthesizing section ADF.

The feature extraction section 30 will envelope-detect an amplitude of the modulation signal IFA, and extract a predetermined frequency band component of the detected envelope detection signal, thereby outputting a feature detection signal Eva indicating a feature of an AM-modulated signal IFA, or a feature detection signal Eva indicating a feature of an FM-modulated signal IFA.

The composition of the feature extraction section 30 can be described in detail as follows. Namely, the feature extraction section 30 contains an envelope detecting means for envelope-detecting the modulation signal IFA, and a low pass filter for switching on a cut-off frequency in response to a broadcast selected by a user or the like.

That is, if a modulation signal IFA of a broadcast selected by a user or the like is an AM-modulated signal, the low pass filter will select a cut-off frequency f1 corresponding to an AM modulation, thereby allowing the passing of the envelope detection signal and outputting a feature detection signal EVa having a feature of an AM-modulated signal IFA.

On the other hand, if a modulation signal IFA of a broadcast selected by a user or the like is an FM-modulated signal, the low pass filter will select a cut-off frequency f2 corresponding to an FM modulation, thereby allowing the passing of the envelope detection signal and outputting a feature detection signal EVa having a feature of an FM-modulated signal IFA.

Here, as a condition for the low pass filter to select the cut-off frequencies f1 and f2, it is necessary to know whether a modulation signal IFA of a broadcast selected by a user or the like is an AM-modulated signal or an FM-modulated signal.

Then, when a user or the like has selected a broadcast station which AM-modulates broadcast contents and transmits the same, the low pass filter will switch a cut-off frequency of the low pass filter to the frequency f1 in response to the selecting operation. On the other hand, when a user or the like has selected a broadcast station which FM-modulates broadcast contents and transmits the same, the low pass filter will switch a cut-off frequency of the low pass filter to the frequency f2 in response to the selecting operation.

The feature extraction section 40 has the same composition as the feature extraction section 30. That is, the feature extraction section 40 contains: envelope detection means for envelope-detecting an amplitude of a modulation signal IFB and outputting an envelope detection signal; and a low pass filter capable of selecting a cut-off frequency.

Then, once a user or the like selects a broadcast station which AM-modulates broadcast contents and transmits the same, the low pass filter within the feature extraction section 40 will switch over to the cut-off frequency f1 to allow the passing of an envelope detection signal, thereby outputting a feature extraction signal Evb indicating a feature of an AM-modulated signal IFB.

Further, once a user or the like selects a broadcast station which FM-modulates broadcast contents and transmits the same, the low pass filter within the feature extraction section 40 will switch over to the cut-off frequency f2 to allow the passing of an envelope detection signal, thereby outputting a feature extraction signal Evb indicating a feature of an FM-modulated signal IFB.

Next, the adder 50 adds together the feature extraction signals EVa and EVb supplied from the feature extraction sections 30 and 40, and supplies the added signal (hereinafter, referred to as "added feature extraction signal") Esum to the tap coefficient altering section 60.

The adaptation synthesizing section ADF includes so-called feed-forward first adaptation filter which receives a modulation signal IFA, a feed-forward second adaptation filter which receives a modulation signal IFB, and an adder for adding together the outputs of the first and second adaptation filters, thereby outputting a modulation signal Y(t) serving as a prediction signal from the adder.

That is, the first adaptation filter has delay means with a tap including n (n: an appropriate integer) delay elements each shifting an input modulation signal IFA by a predetermined delay time, and n+1 coefficient multipliers for multiplying input/output of each delay element by a tap coefficient.

The second adaptation filter has delay means with a tap including n delay elements each shifting an input modulation signal IFB by a predetermined delay time, and n+1 coefficient multipliers for multiplying input/output of each delay element by a tap coefficient.

Then, the adder operates to add together the outputs of 2n+2 coefficient multipliers (namely, 2n+2 outputs), thereby generating modulation signals Y(t) serving as prediction signals.

Namely, if the modulation signals IFA and IFB are represented by input series IFAt and IFBt of each delay time, the tap coefficients of coefficient multipliers are represented by ai and bi, the modulation signals Y(t) serving as prediction signals are represented by output series Yt of each delay time, and variables i are assumed to be integers of 0-n, the adaptation synthesizing section ADF will perform a computational processing expressed by the following equation (3), thereby producing output series Yt which are modulation signals.

### Equation 3

$$Y_t = \sum_{i=0}^{n} (a_i \cdot IFA_{t-1} + b_i \cdot IFB_{t-1}) \quad \dots (3).$$

Next, the tap coefficient altering section 60 calculates an error Err between an envelope of the modulation signal Y(t) and an amplitude of an addition feature extraction signal Esum, while the respective tap coefficients a0-an and b0-bn of the adaptation synthesizing section ADF are adaptively and variably adjusted by virtue of a tap coefficient updating signal EX in a manner such that the foregoing error becomes close to zero.

Then, the respective tap coefficients a0-an and b0-bn are adaptively and variably adjusted by the tap coefficient altering section 60, while the demodulation circuit 70 demodulates the modulation signal Y(t) output from the adaptation synthesizing section ADF, thereby generating and outputting a demodulation signal Sd.

As described above, according to the receiver of the present embodiment, if the respective tap coefficients a0-an and b0-bn of the adaptation synthesizing section ADF are adaptively and variably adjusted in a manner such that an error Err between an envelope of the modulation signal Y(t) output from the adaptation synthesizing section ADF on one hand and an addition feature extraction signal Esum on the other becomes close to zero, it is possible for the modulation signals Y(t) to be approximated (become close) to the phase of the addition feature extraction signal Esum and then synthesized.

For this reason, when receiving a broadcast wave of a broadcast station which AM-modulates broadcast contents and transmits the same, since a phase synthesizing is carried out in a manner such that the modulation signal Y(t) output from the adaptation synthesizing section ADF is approximated to the addition feature extraction signal Esum feature-extracted in accordance with AM-modulated signals IFA and IFB, it is possible to perform an adaptation control on the AM-modulated signals IFA and IFB.

Moreover, when receiving a broadcast wave of a broadcast station which FM-modulates broadcast contents and transmits the same, since a phase synthesizing is carried out in a manner such that the modulation signal Y(t) output from the adaptation synthesizing section ADF is approximated to the addition feature extraction signal Esum feature-extracted in accordance with FM-modulated signals IFA and IFB, it is possible to perform an adaptation control on the FM-modulated signals IFA and IFB.

Furthermore, when receiving a broadcast wave of a broadcast station which AM-modulates broadcast contents and transmits the same, if the cut-off frequency f1 of the low pass filters within the feature extraction sections 30 and 40 is set at a higher frequency than a signal frequency band (usually, 5 kHz) of an originally demanded AM-detection signal Sd (demodulation signal demodulated by the demodulation circuit 70), such cut-off frequency can be applied to an AM-demodulation wave.

Namely, if the cut-off frequency f1 of the low pass filter is set at a high frequency such as 10 kHz which is higher than the signal frequency band of the foregoing AM-detection signal, envelop detection signals (namely, envelope detection signals each having a feature of AM-modulation) of AM-modulated signals IFA and IFB will pass through the low pass filter, and will become feature extraction signals EVa and EVb and supplied to the adder 50.

For this reason, once the tap coefficient altering section 60 adjusts a tap coefficient in a manner such that an error Err between the addition feature extraction signal Esum which will have a feature of an AM modulation and is fed from the adder 50 on one hand and the signal Y(t) on the other is brought close to zero, the adaptation synthesizing section ADF will adaptively put the AM-modulated signals IFA and IFB in the same phase, thereby phase-synthesizing the modulation signals Y(t), thus maximizing a noise removal effect under a flat fading.

In this way, if the cut-off frequency f1 of the low pass filter within the feature extraction section 30 is set at a higher frequency than the signal frequency band of the AM detection signal Sd, such a frequency can be applied to an AM-modulated wave, thereby maximizing a noise removal effect under a flat fading.

Furthermore, when receiving a broadcast wave of a broadcast station which FM-modulates broadcast contents and transmits the same, if the cut-off frequency f2 of the low pass filters within the feature extraction sections 30 and 40 is set at a frequency lower than an AM-altering frequency (usually, about 10 Hz) which causes an AM-alteration in the modulation signals IFA and IFB due to a frequency selective fading, it is possible to improve a reception quality under a flat fading or a frequency selective fading.

Namely, when receiving a broadcast wave of a broadcast station which FM-modulates broadcast contents and transmits the same, if the cut-off frequency f2 of the low pass filter is set at a frequency such as 10 Hz which is lower than the foregoing AM-altering frequency, envelope detection signals (namely, almost flat envelope detection signals each having a feature of FM-modulation) of FM-modulated signals IFA and IFB will pass through the low pass filter, and will become feature extraction signals EVa and EVb and supplied to the adder 50.

For this reason, when the tap coefficient altering section 60 adjusts a tap coefficient in a manner such that an error Err between the addition feature extraction signal Esum which will have a feature of an FM modulation and is fed from the adder 50 on one hand and the signal Y(t) on the other is brought close to zero, the adaptation synthesizing section ADF will adaptively put the FM-modulated signals IFA and IFB in the same phase, thereby phase-synthesizing the modulation signals Y(t), thus improving a reception quality under a flat fading or a frequency selective fading.

In this way, according to the receiver of the present embodiment, it is possible to improve a reception quality with respect to both FM modulation and AM modulation. Further, it is possible to inhibit a multipass distortion even under a reception condition which is either a flat fading or a frequency selective fading.

Furthermore, according to the receiver of the present embodiment, when the respective band dividing IF filters provided in the receiving sections RXa and RXb are formed of ceramic filters, once the adaptation synthesizing section ADF performs a phase synthesizing, it is possible to absorb an irregularity of group delay. Therefore, it is possible for the respective IF filters to be formed of ceramic filters. Besides, since it is not necessary to carry out a step of adjusting an irregularity of group delay, it becomes possible to improve a mass productivity.

Example

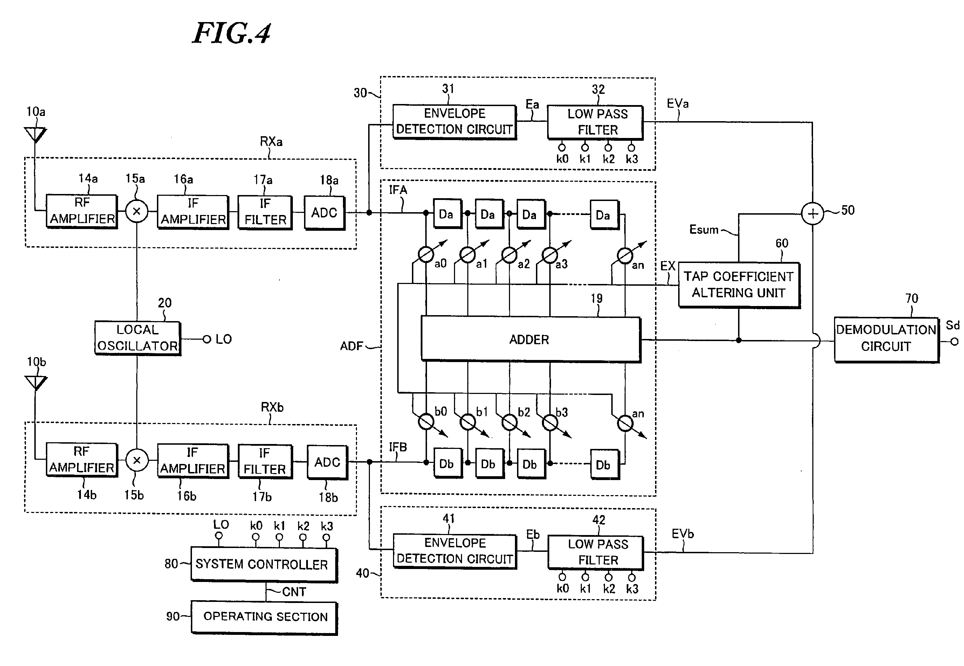

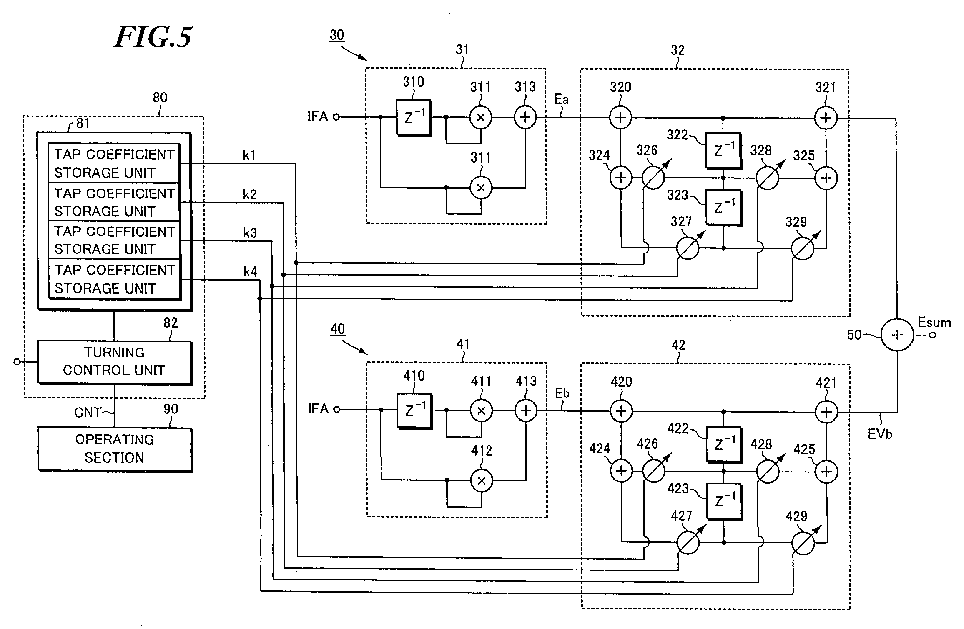

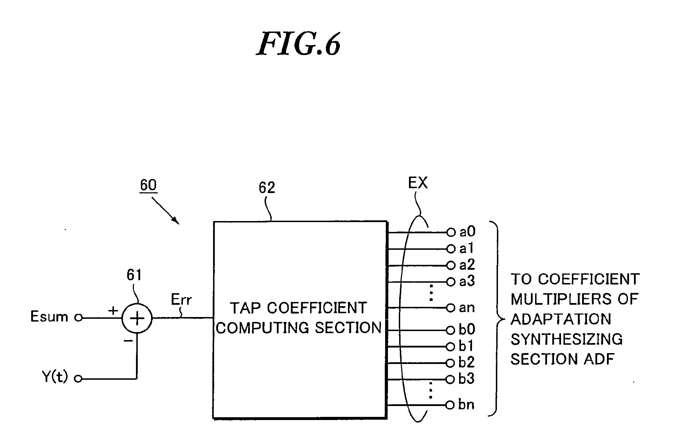

Next, description will be given to explain a more detailed embodiment with reference to Figs. 4 to 6. Fig. 4 is a block diagram showing the composition of a phase synthesizing diversity receiver of the present embodiment, using the same reference numerals to represent portions which are the same as or equivalent to those in Fig. 3. Moreover, Figs. 5 and 6 are also block diagrams showing important portions of the receiver.

At first, description will be given to explain the composition of a receiver formed according to the present embodiment, by performing a comparison with the receiver shown in Fig. 3.

As shown, the receiving sections RXa and RXb have the same composition and includes: RF amplifiers 14a and 14b for amplifying high frequency reception signals output from the reception antennas 10a and 10b which receive coming radio waves; mixers 15a and 15b which generate intermediate frequency signals by combining local signal (local oscillation signal) supplied from the local oscillator 20 with the foregoing reception signals fed from the RF amplifiers 14a and 14b; IF amplifiers 16a and 16b which amplify intermediate frequency signals; IF filters 17a and 17b which output modulation signals by band-dividing amplified intermediate frequency signals; and A/D converters 18a and 18b which carry out an analog-to-digital conversion to convert the respective modulation signals to the modulation signals IFA and IFB of digital-data trains and output the same.

Here, the local oscillator 20 generates the above-mentioned local signal in accordance with a turning control signal LO supplied from a system controller 80 which will be described later. Further, the system controller 80 supplies the turning control signal LO to the local oscillator 20 in accordance with a channel selection instruction CNT input through a control unit 90 from a user or the like.

The adaptation synthesizing section ADF comprises: delay means (not represented by reference numeral) with a tap including n stages of delay elements Da for receiving and shifting modulation signals IFA in synchronism with the sampling frequencies of A/D converters 18a and 18b; n+1 coefficient multipliers (not represented by reference numerals) for multiplying inputs/outputs of the delay elements Da by tap coefficients a0-an; delay means (not represented by reference numeral) with a tap including n stages of delay elements Db for receiving and shifting modulation signals IFB in synchronism with the sampling frequencies of A/D converters 18a and 18b; n+1 coefficient multipliers (not represented by reference numerals) for multiplying inputs/outputs of the delay elements Db by tap coefficients b0-bn; and an adder 19 for adding together all the outputs of 2n+2 coefficient multipliers to generate and output the modulation signals Y(t) serving as prediction signals.

Therefore, the adaptation synthesizing section ADF performs a computational processing represented by the foregoing equation (3) with respect to the modulation signals IFA and IFB to be input, thereby outputting modulation signals Y(t) serving as output series Yi.

Furthermore, with regard to the receiver of the present embodiment, the feature extraction section 30 which receives a modulation signal IFA and outputs a feature extraction signal Eva comprises an envelope detection element 31 and a low pass filter 32, the feature extraction section 40 which receives a modulation signal IFB and outputs a feature extraction signal Evb comprises an envelope detection element 41 and a low pass filter 42.

Further, the receiver of the present embodiment comprises: an adder for adding together feature extraction signals EVa and EVb; a tap coefficient altering section 70 which outputs tap coefficient updating signal EX for automatically adjusting the tap coefficients a0-an in accordance with the addition feature extraction signal Esum output from the adder 50 and the modulation signal Y(t); a demodulation circuit 70 which digital-demodulates the modulation signal Y(t); a system controller 80; and an operating unit 90.

Here, the envelope detection circuits 31 and 41, the low pass filters 32 and 42, and the system controller 80 have the compositions shown in Fig. 5.

First, the envelope detection circuit 31 includes: a delay element 310 having a delay time $\Delta T$ equivalent to an inverse number of the above-mentioned sampling frequency; multipliers 311, 312; and an adder 313.

Then, a multiplier 312 performs a square computation of a modulation signal IFA, the multiplier 311 performs a square computation of a modulation signal IFA delayed by the delay element 310, while the adder 313 adds together the outputs of the multipliers 311 and 312, thereby outputting an envelope detection signal Ea which shows the envelope of a modulation signal IFA.

Namely, if a modulation signal IFA and an envelope detection signal Ea are expressed by an input series IFA (t) and an output series Ea(t) of each sampling period, it is possible to perform a computational processing expressed by the following equation (4), thereby generating an envelope-detection signal Ea(t).

$$\underline{\text{Equation 4}}$$

$$Ea(t) = IFA(t\text{-}1)^2 + IFA(t)^2 \qquad \ldots (4).$$

Here, the envelope detection circuit 41 has the same composition as the envelope detection circuit 31 and comprises: a delay element 410 having a delay time $\Delta T$ equivalent to an inverse number of the above-mentioned sampling frequency; multipliers 411,412; and an adder 413.

Then, a multiplier 412 performs a square computation of a modulation signal IFB, the multiplier 411 performs a square computation of a modulation signal IFB delayed by the delay element 410, while the adder 413 adds together the outputs of the multipliers 411 and 412, thereby outputting an envelope detection signal Eb which shows the envelope of a modulation signal IFB.

Namely, if a modulation signal IFB and an envelope detection signal Eb are expressed by an input series IFA (t) and an output series Ea(t) of each sampling period, it is possible to perform a computational processing expressed by the following equation (5), thereby generating an envelope-detection signal Eb(t).

$$\underline{\text{Equation 5}}$$

$$Eb(t) = IFB(t\text{-}1)^2 + IFB(t)^2 \qquad \ldots (5).$$

Here, the low pass filter 32 is a secondary IIR type digital filter which includes: adders 320, 321, 324, 325; delay elements 322 and 323 each having a delay time $\Delta T$ equivalent to an inverse number of the above-mentioned sampling frequency; coefficient multipliers 326, 327, 328, 329 which are multipliers.

Further, the system controller 80 has a tap coefficient storage unit 81 storing coefficient value data k1, k2, k3, and k4 for changing the respective coefficient values of the coefficient multipliers 326, 327, 328, 329.

Then, when a user or the like operates at the operating unit 90 to select a broadcast station which AM-modulates broadcast contents and transmits the same, the turning control unit 82 within the system controller 80 will supply a turning control signal LO to the local oscillator 20, and at the same time supply the coefficient value data k1, k2, k3, and k4 corresponding to AM modulation from the tap coefficient storage unit 81 to the coefficient multipliers 326,327,328,329, thereby switching the cut-off frequency of the low pass filter 32 to frequency f1.

On the other hand, when a user or the like operates at the operating unit 90 to select a broadcast station which FM-modulates broadcast contents and transmits the same, the turning control unit 82 within the system controller 80 will supply a turning control signal LO to the local oscillator 20, and at the same time supply the coefficient value data k1, k2, k3, and k4 corresponding to FM modulation from the tap coefficient storage unit 81 to the coefficient multipliers 326, 327, 328, 329, thereby switching the cut-off frequency of the low pass filter 32 to frequency f2.

Namely, once a user or the like selects a desired broadcast station through the control unit 90, the turning control unit 82 will operate in accordance with a channel selection instruction CNT to find whether a selected broadcast is an AM-modulated broadcast or an FM-modulated broadcast and supply the coefficient value data k1, k2, k3, and k4 corresponding to AM modulation or the coefficient value data k1, k2, k3, and k4 corresponding to FM modulation, from the tap coefficient storage unit 81 to the coefficient multipliers 326, 327, 328, 329.

In the present embodiment, the tap coefficient storage unit 81 stores in advance the coefficient value data k1, k2, k3, and k4 for setting at 10 kHz the cut-off frequency f1 of the low pass filter 32 corresponding to FM modulation and for setting at 10 Hz the cut-off frequency f2 of the low pass filter 32 corresponding to FM modulation.

In fact, the low pass filter 42 also consists of a secondary IIR type digital filter having the same composition as the low pass filter 32. Namely, the low pass filter 42 comprises adders 420, 421, 424, 425, delay elements 422, 423 each having a delay time equivalent to an inverse number of the above-mentioned sampling frequency, and a secondary IIR type digital filter having coefficient multipliers 426, 427, 428, 429 which are multipliers.

Then, when a user or the like operates at the operating unit 90 to select a broadcast station which AM-modulates broadcast contents and transmits the same, the turning control unit 82 within the system controller 80 will supply a turning control signal LO to the local oscillator 20, and at the same time supply the coefficient value data k1, k2, k3, and k4 corresponding to AM modulation from the tap coefficient storage unit 81 to the coefficient multipliers 426, 427, 428,4 29, thereby switching the cut-off frequency of the low pass filter 42 to frequency f1 (namely 10 kHz).

Then, when a user or the like operates at the operating unit 90 to select a broadcast station which FM-modulates broadcast contents and transmits the same, the turning control unit 82 within the system controller 80 will supply a turning control signal LO to the local oscillator 20, and at the same time supply the coefficient value data k1, k2, k3, and k4 corresponding to FM modulation from the tap coefficient storage unit 81 to the coefficient multipliers 426, 427, 428, 429, thereby switching the cut-off frequency of the low pass filter 42 to frequency f2 (namely 10 Hz).

Next, description will be given to explain the composition of the tap coefficient altering section 60, with reference to Fig. 6.

As shown, the tap coefficient altering section 60 comprises: a subtractor 61 which outputs an error Err by subtracting a modulation signal Y(t) as a prediction signal from an addition feature extraction signal Esum; and a tap coefficient calculation unit 62 which calculates tap coefficients a0-an and b0-bn of the coefficient multipliers in the adaptation synthesizing section ADF in accordance with a predetermined calculation algorithm so that the error Err will become close to zero. Then, the tap coefficient calculation unit 62 adjusts the tap coefficients a0-an and b0-bn of the respective coefficient multipliers in accordance with the tap coefficient updating signal EX, thereby enabling the adder 19 to output a modulation signal Y(t) approximated to the phase of the addition feature extraction signal Esum.

Next, description will be given to explain an operation of the receiver having the above-described composition formed according to the present embodiment.

At first, description will be given to explain an operation when a user or the like has selected a broadcast station which AM-modulates broadcast contents and transmits the same.

At this time, the receiving sections RXa and RXb will operate in accordance with the instructions fed from the system controller 80 to output AM-modulated signals IFA and IFB, thus enabling the envelope detection circuits 31 and 41 to output the envelope detection signals Ea and Eb indicating the envelopes of the modulation signals IFA and IFB. Further, since the cut-off frequency f1 becomes 10 kHz according to an instruction from the system controller 80, the envelope detection signals Ea and Eb will pass through the low pass filters 32 and 42, while the feature extraction signals EVa and EVb having the feature of AM-modulation wave are input into the adder 50, thus enabling the adder 50 to supply to the tap coefficient altering section 60 an addition feature extraction signal Esum containing the feature extraction signals EVa and EVb.

Furthermore, the adaptation synthesizing section ADF receives the modulation signals IFA, IFB and performs a computational processing expressed by the foregoing equation (3), thereby outputting a modulation signal Y(t) as a prediction signal.

Then, the tap coefficient altering section 60 automatically adjusts the respective tap coefficients a0-an and b0-bn of the coefficient multipliers within the adaptation synthesizing section ADF in a manner such that an error Err between the modulation signal Y(t) and the addition feature extraction signal Esum becomes 0, thereby enabling the adaptation synthesizing section ADF to output a modulation signal Y(t) approximated to the phase of the addition feature extraction signal Esum, and enabling the modulation circuit 70 to demodulate the modulation signal Y(t) so as to output a demodulation signal Sd.

In this way, when demodulating the demodulation signal Sd from the AM-modulated signals IFA and IFB, the tap coefficient altering section 60 can adjust the tap coefficients of the coefficient multipliers within the adaptation synthesizing section ADF in a manner such that an error Err between the signal Y(t) on one hand and the addition feature extraction signal Esum which will have a feature of AM modulation on the other will become close to zero. As a result, the adaptation synthesizing section ADF can adaptively put the AM-modulated signals IFA and IFB at the same phase so as to phase-synthesize the modulation signals Y(t), thereby maximizing the noise removal effect under a flat fading.

Next, description will be given to explain an operation when a user or the like has selected a broadcast station which FM-modulates broadcast contents and transmits the same.

At this time, the receiving sections RXa and RXb will operate in accordance with the instructions fed from the system controller 80 to output AM-modulated signals IFA and IFB, thus enabling the envelope detection circuits 31 and 41 to output almost flat envelope detection signals Ea and Eb indicating the envelopes of the modulation signals IFA and IFB.

Further, since the cut-off frequency f2 becomes 10 Hz according to an instruction from the system controller 80, almost DC components of the envelope detection signals Ea and Eb will pass through the low pass filters 32 and 42, while the feature extraction signals EVa and EVb having the feature of FM-modulation wave are input into the adder 50, thus enabling the adder 50 to supply to the tap coefficient altering section 60 an addition feature extraction signal Esum containing the feature extraction signals EVa and EVb.

On the other hand, the adaptation synthesizing section ADF receives the modulation signals IFA, IFB and performs a computational processing expressed by the foregoing equation (3), thereby outputting a modulation signal Y(t) as a prediction signal.

Then, the tap coefficient altering section 60 automatically adjusts the respective tap coefficients a0-an and b0-bn of the coefficient multipliers within the adaptation synthesizing section ADF in a manner such that an error Err between the modulation signal Y(t) and the addition feature extraction signal Esum will become 0, thereby enabling the adaptation synthesizing section ADF to output a modulation signal Y(t) approximated to the phase of the addition feature extraction signal Esum, and enabling the modulation circuit 70 to demodulate the modulation signal Y(t) so as to output a demodulation signal Sd.

In this way, when demodulating the demodulation signal Sd from the AM-modulated signals IFA and IFB, the tap coefficient altering section 60 can adjust the tap coefficients of the coefficient multipliers within the adaptation synthesizing section ADF in a manner such that an error Err between the signal Y(t) on one hand and the addition feature extraction signal Esum which will have a feature of AM modulation on the other becomes close to zero. As a result, the adaptation synthesizing section ADF can adaptively put the AM-modulated signals IFA and IFB at the same phase so as to phase-synthesize the modulation signals Y(t), thereby making it possible to improve a reception quality under a flat fading or a frequency selective fading.

As described above, according to the receiver of the present embodiment, it is possible to improve a reception quality with respect to both FM modulation and AM modulation. Further, it is possible to inhibit a multipass distortion even under a reception condition which is either a flat fading or a frequency selective fading.

Furthermore, according to the receiver of the present embodiment, when the respective band dividing IF filters 17a, 17b provided in the receiving sections RXa and RXb are formed of ceramic filters, once the adaptation synthesizing section ADF performs a phase synthesizing, it is possible to absorb an irregularity of group delay. Therefore, it is possible for the respective IF filters 17a, 17b to be formed of ceramic filters. Besides, since it is not necessary to carry out a step of adjusting an irregularity of group delay, it becomes possible to improve a mass productivity.

In addition, it is also possible to form the receiver of the present embodiment by including the adaptation synthesizing section ADF, the envelope detection circuits 31 and 41, the low pass filters 32 and 42, the adder 50, and the tap coefficient altering section 60 in the form of respective hardware elements. Alternatively, it is possible for the receiver of the present embodiment to have a composition capable of performing a so-called program processing using a digital signal processor (DSP).

Moreover, it is also possible to prepare a computer program capable of providing the same functions as the adaptation synthesizing section ADF, the envelope detection circuits 31 and 41, the low pass filters 32 and 42, the adder 50, the tap coefficient altering section 60, and to cause a micro processor (MPU) provided in a personal computer (PC) to execute the computer program.

**Claims**

1. A phase synthesizing diversity receiver having receiving means for generating modulation signals from signals received by a plurality of reception antennas and outputting the modulation signals, the receiver comprising:

   feature extraction means for extracting features of envelopes of the modulation signals and outputting feature extraction signals;
   adder means for adding together the feature extraction signals output from the feature extraction means to generate addition feature extraction signals;
   adaptation synthesizing means for shifting the modulation signals at each predetermined delay time, multiplying each shifted signal by a tap coefficient to generate a multiplication result for each of the modulation signals, and adding together multiplication results to generate modulation signals as prediction signals; and
   tap coefficient altering means for automatically adjusting the tap coefficients to approximate the modulation signals as prediction signals generated by the adaptation synthesizing means to the addition feature extraction signals.

2. The phase synthesizing diversity receiver according to claim 1, wherein the feature extraction means comprises:

   envelope detection means for detecting envelopes of the modulation signals and outputting envelope detection signals; and
   low pass filter means for passing the envelope detection signals and outputting the envelope detection signals as the feature extraction signals.

3. The phase synthesizing diversity receiver according to claim 2, wherein the low pass filter means is provided such that when the modulation signals output from the receiving means are AM-modulated signals, the low pass filter means switches over to a cut-off frequency which is higher than a frequency band of an AM-demodulated signal, and when the modulation signals output from the receiving means are FM-modulated signals, the low pass filter means switches over to a cut-off frequency which is lower than an AM altering frequency generated due to a frequency selective fading of the modulation signals output from the receiving means.

4. The phase synthesizing diversity receiver according to any one of claims 1 to 3, wherein the tap coefficient altering means is provided such that when the modulation signals output from the receiving means are FM-modulated signals, the tap coefficient altering means changes the addition feature extraction signal to a reference signal having a predetermined value, and automatically adjusts the tap coefficient so as to approximate the modulation signal serving as the prediction signal generated in the adaptation synthesizing means to the reference signal.

5. The phase synthesizing diversity receiver according to any one of claims 1 to 4, further comprising demodulation means for demodulating the modulation signals serving as the prediction signals generated in the adaptation synthesizing means.

6. A reception method for use in a phase synthesizing diversity receiver having receiving means for generating modulation signals from signals received by a plurality of reception antennas and outputting the modulation signals, the method comprising:

   a feature extracting step for extracting features of envelopes of the modulation signals and outputting feature extraction signals;
   an adding step for adding together the feature extraction signals output in the feature extracting step to generate addition feature extraction signals;
   an adaptation synthesizing step for shifting the modulation signals at each predetermined delay time, multiplying each shifted signal by a tap coefficient to generate a multiplication result for each of the modulation signals, and adding together multiplication results to generate modulation signals as prediction signals; and
   a tap coefficient altering step for automatically adjusting the tap coefficient to approximate the modulation signals as prediction signals generated in the adaptation synthesizing step to the addition feature extraction signals.

## FIG.1 A

RXa

1a

| 2a | 3a | 4a | 5a |
|---|---|---|---|
| RF AMPLIFIER | × | IF AMPLIFIER | IF FILTER |

IFA

LOCAL OSCILLATOR ~6

1b

RXb

| 2b | 3b | 4b | 5b |
|---|---|---|---|
| RF AMPLIFIER | × | IF AMPLIFIER | IF FILTER |

IFB

7 ~ + IFab

8

DEMODULATION CIRCUIT

DEMODULATION SIGNAL (OUTPUT)

**PRIOR ART**

## FIG.1 B

1a

RXa

RECEIVER

IFA

8a

DEMODULATION CIRCUIT

Sda

9a

LEVEL EXTRACTION CIRCUIT

11a

NOISE EXTRACTION CIRCUIT

12

DEMODULATION SIGNAL (OUTPUT)

6 — LOCAL OSCILLATOR

10— SIGNAL NOISE LEVEL COMPARING CIRCUIT

1b

LEVEL EXTRACTION CIRCUIT

9b

NOISE EXTRACTION CIRCUIT

11b

RECEIVING SECTION

RXb

IFB

DEMODULATION CIRCUIT

8b

Sdb

# FIG.2

EP 1 770 876 A1

# *FIG.3*

EP 1 770 876 A1

**FIG.4**

EP 1 770 876 A1

FIG.5

## FIG.6

60

61

62

EX

Esum ○——

Y(t) ○——

+

−

Err

TAP COEFFICIENT
COMPUTING SECTION

○ a0
○ a1
○ a2
○ a3
⋮
○ an
○ b0
○ b1
○ b2
○ b3
⋮
○ bn

TO COEFFICIENT
MULTIPLIERS OF
ADAPTATION
SYNTHESIZING
SECTION ADF

## INTERNATIONAL SEARCH REPORT

| International application No. |
| --- |
| PCT/JP2005/012450 |

A. CLASSIFICATION OF SUBJECT MATTER
  Int.Cl$^7$ H04B7/08, 7/005

According to International Patent Classification (IPC) or to both national classification and IPC

B. FIELDS SEARCHED

Minimum documentation searched (classification system followed by classification symbols)
  Int.Cl$^7$ H04B7/08, 7/005

Documentation searched other than minimum documentation to the extent that such documents are included in the fields searched
  Jitsuyo Shinan Koho         1922-1996   Jitsuyo Shinan Toroku Koho   1996-2005
  Kokai Jitsuyo Shinan Koho   1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 6-164434 A (Toyota Central Research And Development Laboratories, Inc.),<br>10 June, 1994 (10.06.94),<br>Par. No. [0024]; Fig. 4<br>(Family: none) | 1,2,4-6<br>3 |
| Y<br>A | JP 3-502515 A (RILLING, Kenneth, F.),<br>06 June, 1991 (06.06.91),<br>Full text; Fig. 5<br>& WO 89/07864 A        & EP 400001 A | 1,2,4-6<br>3 |
| Y<br>A | JP 7-336130 A (Toyota Central Research And Development Laboratories, Inc.),<br>22 December, 1995 (22.12.95),<br>Par. No. [0027]; Fig. 1<br>(Family: none) | 4<br>1-3,5,6 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28 September, 2005 (28.09.05) | 11 October, 2005 (11.10.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/012450 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y<br>A | JP 8-331468 A  (Pioneer Electronic Corp.),<br>13 December, 1996 (13.12.96),<br>Par. No. [0015]; Figs. 1, 2<br>(Family: none) | 4<br>1-3,5,6 |
| A | JP 2-277324 A  (Fujitsu Ltd.),<br>13 November, 1990 (13.11.90),<br>Full text; all drawings<br>(Family: none) | 1-6 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6216815 A